(19) Europäisches Patentamt
European Patent Office
Office européen des brevets

(11) **EP 2 004 706 B2**

(12) **NEW EUROPEAN PATENT SPECIFICATION**
After opposition procedure

(45) Date of publication and mention
of the opposition decision:
**27.09.2017 Bulletin 2017/39**

(45) Mention of the grant of the patent:
**24.07.2013 Bulletin 2013/30**

(21) Application number: **07728117.8**

(22) Date of filing: **13.04.2007**

(51) Int Cl.:
**C08F 210/16** (2006.01)  **C08F 4/22** (2006.01)

(86) International application number:
**PCT/EP2007/053652**

(87) International publication number:
**WO 2007/118866 (25.10.2007 Gazette 2007/43)**

(54) **BRANCHED LOW AND MEDIUM DENSITY POLYETHYLENE**

VERZWEIGTES POLYETHYLEN NIEDERER UND MITTLERER DICHTE

POLYÉTHYLÈNE À DENSITÉ FAIBLE ET MOYENNE, RAMIFIÉ

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **13.04.2006 EP 06112660
13.04.2006 EP 06112662**

(43) Date of publication of application:
**24.12.2008 Bulletin 2008/52**

(73) Proprietor: **TOTAL RESEARCH & TECHNOLOGY
FELUY**
**7181 Seneffe (BE)**

(72) Inventors:
• **MICHEL, Jacques**
**B-7181 Seneffe (Feluy) (BE)**
• **DEBRAS, Guy**
**B-6210 Frasnes-les-Gosselies (BE)**
• **BODART, Philippe**
**B-4480 Clermont Sous Huy (engis) (BE)**
• **DAMS, Mieke**
**B-2440 Geel (BE)**
• **CHARLIER, Pascal**
**B-1080 Evere (BE)**

(74) Representative: **Dennemeyer & Associates S.A.**
**Postfach 70 04 25**
**81304 München (DE)**

(56) References cited:
EP-A- 0 882 743          EP-A- 0 962 469
EP-A1- 1 845 110         EP-A1- 1 845 111
WO-A-99/35174            US-A- 5 576 263
US-A1- 2004 249 093      US-A1- 2005 239 638
US-B1- 6 174 981

• SHROFF R N ET AL: "Long-chain-branching
index for essentially linear polyethylenes"
MACROMOLECULES, ACS, WASHINGTON, DC,
US, vol. 32, no. 25, 1999, pages 8454-8464,
XP002298738 ISSN: 0024-9297 cited in the
application
• SEAY ET AL: "Film-casting behavior as a function
of molecular structure and rheology" SOCIETY
OF PLASTICS ENGINEERS. ANNUAL
TECHNICAL CONFERENCES, THE SOCIETY,
BROOKFIELD CENTER, CT, US, vol. 64th, 2006,
pages 2361-2365, XP009087577 ISSN: 0272-5223
• STARCK, P. ET AL: "Thermal and rheological
studies on the molecular composition and
structure of metallocene- and
Ziegler-Natta-catalyzed ethylene-.alpha.-olefin
copolymers" JOURNAL OF APPLIED POLYMER
SCIENCE , 83(5), 1140-1156 CODEN: JAPNAB;
ISSN: 0021-8995, 2002, XP002445177
• GABRIEL, CLAUS ET AL: "Influence of long -
chain branches in polyethylenes on linear
viscoelastic flow properties in shear"
RHEOLOGICA ACTA , 41(3), 232-244 CODEN:
RHEAAK; ISSN: 0035-4511, 2002, XP002445178

EP 2 004 706 B2

**Description**

FIELD OF THE INVENTION

The present invention relates to a new class of low density and medium density polyethylene resins and the process to obtain them using a chromium catalyst.

BACKGROUND OF THE INVENTION

Polyethylene is one of the oldest commodity polymers. Every polyethylene can be classified into various categories based on its density and the pressures used to obtain them.

Low density polyethylene (LDPE) is the oldest member of the polyethylene family. It is synthesized at high temperatures and pressures and has a density of between 0.910 and 0.940 g/cm$^3$ due to the presence of a high degree of long and short chain branching. It has unique flow properties, allowing it to be easily processed. However, as the crystal structure is not tightly packed and the inter- and intramolecular forces are weak, mechanical properties such as tensile strength, environmental stress crack resistance (ESCR) and tear resistance are particularly low in LDPE. Furthermore, polymerisation occurs via a radical mechanism requiring high pressures of about 250 MPa, which is much more technically demanding than catalytic low-pressure polymerisations. Nevertheless, its high processability makes it particularly suitable for certain film applications.

New polyethylene resins encompassing broadly the density range covered by LDPE appeared during the mid-fifties. These resins are produced at much lower pressures than LDPE. They can be classified as medium density polyethylene (MDPE) and linear low density polyethylene (LLDPE) as explained below.

MDPE is defined as a polyethylene having a density of between 0.926 to 0.945 g/cm$^3$. It can be obtained for example with chromium, Ziegler-Natta or metallocene catalysts. The density is regulated with the addition of a comonomer during polymerisation, usually an alpha-olefin comprising 3 to 10 carbon atoms such as propylene, butenes, pentenes or hexenes. MDPE generally has good impact resistances and ESCR, but processability can be insufficient. It is typically used for pipes, fittings and film applications.

LLDPE has a density of from 0.915 to 0.925 g/cm$^3$. In contrast to LDPE however, it is substantially linear having a significant degree of short chain branches, but almost no long chain branches. LLDPE is commonly made as MDPE, but with an increased relative amount of comonomer. The more comonomer used in the polymerisation, the lower the density of the polyethylene. LLDPE has higher tensile strength, impact resistance and ESCR than LDPE, but has a lower melt strength and is not as easy to process. LLDPE is predominantly used in film applications.

LDPE can be processed a lot easier than MDPE and LLDPE since it has a high degree of long chain branching (LCB). However, as stated above, due to the extreme conditions required to manufacture LDPE, it is not one of the easiest polymers to obtain. There is therefore a need to find a polymerisation catalyst that can create a high degree of long chain branching in low and medium density polyethylene (referred to herein as BLDPE and BMDPE respectively) under low pressures. The presence of long chain branching (LCB) can lead to a marked improvement in processability.

The Applicant TOTAL PETROCHEMICALS RESEARCH FELUY discloses in European patent application 07104426.7 a polyethylene obtained using a metallocene catalyst having a g$_{rheo}$ which indicates the presence of long chain branching. However, metallocene catalysts are not suitable for preparing polyethylene having wide molecular weight distributions, making the polyethylene harder to process.

A polyethylene with good processability is generally associated with high throughput at a given extruder RPM, low specific mechanical energy, low amps, low torque, absence of surface defects and melt fracture at high shear rates, high melt strength and low extruder head pressures.

It is an aim of the present invention to obtain polyethylene with good processability.

It is also an aim of the present invention to obtain polyethylene having a good balance between processability and mechanical properties.

It is also an aim of the invention to obtain polyethylene with high melt strengths.

It is also an aim of the invention to obtain polyethylene with low extruder head pressures during extrusion.

It is further an aim of the invention to obtain polyethylene with similar processability to LDPE, but under lower polymerisation pressures.

In addition, it is an aim of the invention to obtain low density polyethylene with long chain branching using a chromium catalyst.

In addition, it is an aim of the invention to obtain a medium density polyethylene with long chain branching using a chromium catalyst.

It is a further aim of the invention to obtain a polyethylene with good processability without having to use processing aids, peroxides, oxygen or irradiation.

At least one of these aims is fulfilled by the present invention.

SUMMARY OF THE INVENTION

The invention relates to a polyethylene as defined in claim 1.

The polyethylene according to the invention can be obtained according to a polymerisation process comprising the following steps:

a) injecting ethylene, one or more alpha-olefinic comonomers comprising 3 to 10 carbon atoms and an activated chromium-based catalyst into a gas phase polymerisation reactor;
b) copolymerising said ethylene and comonomer in said reactor in the gas phase; and
c) retrieving an ethylene copolymer from said reactor having a density of from 0.910 to 0.945 g/cm$^3$;

said activated catalyst being previously obtained by:

i) providing a silica-based support having a specific surface area of at least 250 m$^2$/g and of less than 400 m$^2$/g and comprising a chromium compound deposited thereon so that the chromium concentration is at least 0.1 wt-% and at most 1.0 wt-% based on the weight of the titanated chromium-based catalyst;
ii) dehydrating the product of step i);
iii) titanating the product of step ii) in an atmosphere of dry and inert gas containing at least one vaporised titanium compound of the general formula selected from $R_n Ti(OR')_m$ and $(RO)_n Ti(OR')_m$, wherein R and R' are the same or different hydrocarbyl groups containing from 1 to 12 carbon atoms, and wherein n is 0 to 3, m is 1 to 4 and m+n equals 4, to form a titanated chromium-based catalyst having a titanium concentration of from 1 wt-% to 5 wt-% based on the weight of the titanated chromium-based catalyst;
iv) activating the titanated chromium-based catalyst of step iii) at a temperature of at least 500°C

BRIEF DESCRIPTION OF THE DRAWINGS

Figure 1 is a graph showing the relationship between long chain branching and density of the polyethylene according to the invention and according to comparative examples. The abscissa shows density (in g/cm$^3$) and the ordinate represents $g_{rheo}$, whereby a lower $g_{rheo}$ indicates more long chain branching.

Figure 2 is a graph showing melt strength (in N) as a function of shear rate (in s$^{-1}$) for various polyethylene according to the invention and according to comparative examples.

Figure 3 is a graph showing the elongational viscosity (in Pa.s) of three different polyethylenes as a function of time (in s).

Figures 4 and 5 are graphs representing the tear resistance (in N/mm) in the transverse and in the machine direction respectively, both as a function of density (in g/cm$^3$) for polyethylenes according to the invention and according to prior art.

Figure 6 is a graph demonstrating the dart impact resistance (in g/$\mu$m) as a function of density (g/cm$^3$) for polyethylenes according to the invention and according to prior art.

DETAILED DESCRIPTION OF THE INVENTION

### *The Polyethylene*

The polyethylene according to the invention has a specific combination of properties consisting of particular density, molecular weight, molecular weight distribution and long chain branching. All the properties of the polyethylene resins described below relate to resins devoid of processing aids, which would normally be used to reduce extruder head pressure during extrusion. The resins were neither extruded in the presence of peroxides or oxygen (reactive extrusion), nor were the resins irradiated, both being treatments known to increase LCB content.

### *Density*

The polyethylene according to the invention is a low to medium density polyethylene having a density of from 0.910 to 0.935 g/cm$^3$. The density can be of from 0.910, 0.915, 0.918, 0.920 or 0.925 g/cm$^3$ up to 0.928, 930 or 935 g/cm$^3$. As is known by a person skilled in the art, the density of a polyethylene is regulated by two factors: the temperature within the reactor and more importantly the amount of comonomer injected into the reactor. In general, it is known that the higher the relative amount of comonomer injected into the reactor, the lower the density of the resulting ethylene copolymer will be due to the inclusion of short chain branches along the polymer backbone.

In the case of the present invention it has been surprisingly discovered that under certain polymerisation conditions and using a specific catalyst, a decrease in density results in an increase in the long chain branches along the polymer backbone. Therefore, the lower the density of the obtained polyethylene, the more long chain branching will occur in the polyethylene and hence the better its processability will be.

Density is measured according to the method of standard test ASTM 1505-85.

_Melt flow index_

The polyethylene of the invention has a high load melt index (HLMI) of from 2 to 150 dg/min, preferably of from 2 to 100 dg/min, more preferably of from 2 to 50 dg/min. Furthermore it has a melt index (MI2) of from 0.01 to 2 dg/min, preferably of from 0.01 to 1 dg/min, more preferably of from 0.01 to 0.8 dg/min.

The melt index of the polymers is measured according to the standard ASTM D 1238. MI2 corresponds to a measure at 190°C under a load of 2.16 kg. HLMI corresponds to a measure at 190°C under a load of 21.6 kg and the results are given in g/10 minutes.

_Molecular weight and molecular weight distribution_

As the molecular weight distribution of a polyethylene increases, so does its processability. The polyethylene according to the present invention has a molecular weight distribution (MWD), also known as the polydispersity index (PDI), of at least 10. This is calculated herein as Mw/Mn, wherein Mw is the weight average molecular weight and Mn is the number average molecular weight of the polyethylene.

The number average molecular weight Mn and the weight average molecular weight Mw, as well as the Z average molecular weight Mz, can be measured by gel permeation chromatography.

_Long chain branching_

Throughout this description, long chain branching (LCB) means chains long enough for entanglements to occur. In several reports (Fetter et al., 1996, Physical Properties of Polymers Handbook; Janzen and Colby, 1999, J. Mol. Struct.) the critical entanglement length for polyethylene is claimed to be around 150 carbons. Therefore, in theory a branch should also have a minimum length of about 150 carbons to have rheological significance for the polyethylene.

There are various was to determine branching in a polyethylene:

1. **$^{13}$C NMR**
This method is only suitable for studying the short chain branching of polyethylene, since in a $^{13}$C NMR spectrum it is impossible to differentiate branches, which are over 6 carbon atoms long from the long chain branches. Furthermore, this technique is not sensitive enough to detect low concentrations of long chain branches.

2. **Solution techniques**
These include the method of determining long chain branches using size exclusion chromatography (SEC) coupled with on-line viscosity or light scattering detectors (VISCO) to obtain what is known as the g' parameter. LCB can be determined by what is known as SEC-VISCO as follows. SEC-VISCO experiments are conducted on a GPCV-200 instrument from Waters. The apparatus is composed of a set of three columns (two Shodex AT-806MS from Showa Denko and one Styragel HT6E from Waters) and of an injector maintained at a temperature of 145°C and of a circulating pump. The PE is dissolved in filtered 1,2,4-trichlorobenzene stabilized with 1 g/l of BHT at a concentration of 0.1 % at room temperature followed by heating to a temperature of 150°C TCB without stirring. The solution is then filtered on a 0.5 μm mesh size filter using Polymer Laboratories PL-SP260 apparatus. About 400 μl of the filtered solution is finally injected in the columns at a flow rate of 1 ml/min and the eluted solution passes through two detectors: a differential refractometer and a viscometer. The parameter g' is then calculated for each eluted fraction with Empower software using equation

$$g_i^{'} = \frac{[\eta]_{i,branched}}{K(M_i)^{\alpha}} = \frac{[\eta]_{i,branched}}{[\eta]_{i,linear}}$$

In the above equation $g'_i$ is the ratio of intrinsic viscosity of the branched PE measured with on-line viscometer to the intrinsic viscosity of a linear PE eluted at the same $i^{th}$ elution volume with K = 4.167 10$^{-4}$ dl/g and $\alpha$ = 0.72. The molecular weight of the linear PE is calculated with the universal calibration method using K = 1.035 10$^{-4}$ dl/g and $\alpha$ = 0.72 for polystyrene (PS) standard having a narrow MWD.

One can thus have a curve of $g'_i$ versus $M_i$ from all the eluted fractions. The parameter g' is the weight average value of all $g'_i$. The weight fraction i of the PE is detected with the differential refractometer.

$$g' = \frac{\sum_i w_i g'_i}{\sum_i w_i}$$

A g' equal to or about 1 represents a polyethylene with no or little long chain branching. A g' significantly less than 1 represents a polyethylene with a high amount of long chain branching.

From g', it is then possible to derive LCB/10,000 C using several simplified hypotheses (trifunctional branch points, random distribution of branch lengths, uniform number of branches per molecule) as explained by Mirabella and Wild (F. M. Mirabella and L. Wild, in 'Determination of Long-Chain Branching Distributions of Polyethylenes', in 'Polymer Characterization', Amer. Chem. Soc. Symp. Series 227, 23, 1990).

However, as for the $^{13}$C NMR technique, solution techniques are inadequate for measuring branching in a polyethylene with a sparse amount of long chain branches. As a matter of fact, the polyethylene of the present invention shows rheological properties which are characteristic of long chain branching, but at the same time it has a g' of almost 1.

Without wishing to be bound by theory, it is believed that polyethylenes of this invention have few long chain branched macromolecules but that the arms of these long chain branches are very long and these may interact efficiently with other high molecular mass macromolecules. It should be noted that the level of LCB is lower (about an order of magnitude) for the low pressure polyethylene of this invention compared to LDPE obtained by radical polymerisation at high pressure, but that the LCB topology is as important as the LCB concentration for influencing rheological and processing behaviour. All of these characteristics of molecular structure entail on the polyethylenes of the present invention very long relaxation mechanisms in the melt that can be quantified by classical rheological experiments.

Thus methods to detect long chain branching by using classical rheological experiments have been developed. There are several methods to quantify the long chain branching concentration of polyethylene with relatively low concentrations of long chain branching in comparison with LDPE (high pressure radical polymerisation):

1. **DRI (Dow Rheology Index)** has been introduced by S. Lai and G.W. Knight (ANTEC '93 Proceedings, Insite™ Technology Polyolefins (ITP)-New Rules in the Structure/Rheology Relationship of Ethylene &-Olefin Copolymers, New Orleans, La., May 1993; Antec'94, Dow Rheology Index (DRI) for Insite™ Technology Polyolefins (ITP): Unique structure-Processing Relationships, pp.1814-1815) to quantify LCB in what they called substantially linear polyolefins (EP-A-0608369, US-5,665,800). They define the Dow Rheology Index (DRI) as a new rheological measurement, which expresses a polymer's normalised relaxation time as the result of long chain branching. It was shown that a low value of the Dow rheological index is indicative of low or inexistent long chain branching. DRI is equal to 0 for linear mPE. DRI is not suitable to quantify long chain branching in PE resins with polydispersity indices (PDI) ($M_w/M_n$) above roughly 4. Indeed DRI values of about 0.4 are found for ZN PE resins with no long chain branching and PDI values from 4 to 6. DRI is thus not suitable to gauge long chain branching in PE resins having a broad molecular weight distribution.

2. **LCBI (Long Chain Branching Index)** introduced by Shroff and Mavridis (R. N. Shroff and H. Mavridis, Macromolecules, 32, 8454 (1999)) is defined as the ratio of intrinsic viscosities estimated by rheology to those determined via solution techniques.

$$LCBI = \frac{[\eta]_{rheo}}{[\eta]_{sol}} - 1 \; .$$

wherein $[\eta]_{rheo}$ and $[\eta]_{sol}$ are the intrinsic viscosities obtained respectively from rheology and solution techniques. Thus, LCBI is zero for linear samples and is above zero for polyethylene containing long chain branching. A high level of LCB is encountered with LCBI above 0.8. Instead of determining intrinsic viscosity from the relative viscosity at 0.2 dg/min as explained in their publication, the intrinsic viscosity value is calculated here via solution (expressed in dl/g) in terms of weight average molecular weight Mw (expressed in Da) obtained by size exclusion chromatography (SEC) with equation

$$[\eta]_{sol} = 5.25 * 10^{-4} (M_w)^{0.76}$$

Intrinsic viscosity can be inferred by rheology through the use of Mw inferred from zero shear viscosity. Indeed, zero shear viscosity $\eta_0$, expressed in Pa.s, is related to the weight average molecular weight Mw, expressed in Da, by equation

$$\eta_0 = 4.4927 * 10^{-16} (M_w)^{3.8412}$$

This equation is derived from 50 linear polyethylene samples, both metallocene and Ziegler-Natta polyethylene, with Mw ranging from 30 to 700 kDa, PDI (Mw/Mn) values from 2 to 25 and densities of from 0.87 to 0.965 g/cm$^3$. Zero shear viscosity $\eta_0$ is estimated by fitting the Carreau-Yasuda flow curve (W) at a temperature of 190°C, obtained by oscillatory shear rheology on ARES equipment (manufactured by TA Instruments) in the linear viscoelasticity domain. Circular frequency (W in rad/s) varies from 0.05-0.1 rad/s to 250-500 rad/s and the shear strain is typically 10 %.

$$\eta = \eta_0 \Big/ (1 + (W * \tau)^b)^{((1-n)/b)}$$

wherein parameters $\tau$, b and n are fitting parameters called respectively relaxation time, breadth parameter and power law parameter.

The LCBI is thus rewritten as

$$LCBI = \frac{0.572 * (\eta_0)^{0.1979}}{5.25 * 10^{-4} (M_w)^{0.76}} - 1$$

The LCBI fulfills the following equation

$$LCBI > 3.5 * (1 - (1/3.73 + 6.08 * 10^{-7} (M_w)^{2.5} + 0.144 /(\ln(\rho))))^2$$

wherein Mw is the weight average molecular weight expressed in kDa and p is the density expressed in g/cm$^3$.

3. Alternatively, it is possible to infer long chain branching concentration from zero shear viscosity values at a temperature of 190°C using **Colby and Janzen's equation** (J. Janzen and R. H. Colby, J. Mol. Struct. 485-486, 569,1999) that gives two solutions for long chain branching concentration: one for PE resins with sparse long chain branching and one for high concentrations of long chain branching (typically for LDPE). For the resins of this invention, the solution for sparse amount of LCB would have to be used.

However, none of these three rheological methods for determining the long chain branching of polyethylene take into account other properties that can have important rheological effects, for example the molecular weight distribution (MWD) i.e. PDI and, to a lesser extent, short chain branching. Therefore, we present herein a further method devised by the Applicant for providing a more accurate measurement of long chain branching in polyethylene:

4. In order to quantify the long chain branching concentration with rheology, we have adapted Shroff and Mavridis definition of LCBI (Long Chain Branching Index) to our high molecular weight PE samples (R. N. Shroff and H. Mavridis, Macromolecules, 32, 8454,1999). As explained by those authors, LCBI quantifies the rheological effect of long chain branching (enhancement of shear viscosity at low shear rates). In a way similar to that used for LCBI, a new method is used in the present invention to quantitatively determine the long chain branching concentration through its effect on enhancement of zero-shear viscosity when long chain branching concentration is too low to be detected by conventional techniques. Enhancement of zero shear viscosity by long chain branching is quantified as follows:

$$g_{rheo}(PE) = \frac{M_w(SEC)}{M_w(\eta_0, MWD, SCB)}$$

In the present method, and similarly to g', $g_{rheo}$ is equal to one for linear PE and decreases with increasing amount of long chain branching.

Quite surprisingly, it is observed that significant improvements in zero shear viscosity prediction as a function of molecular weight can be obtained by including effects of short chain branching (SCB) and molecular weight distribution (MWD), represented by the polydispersity index PDI. Therefore in Mw values inferred from measurements of $\eta_0$, Mz, Mn and density, corrections must also be included.

The polyethylene has a $g_{rheo}$ satisfying the following equation:

$$g_{rheo} < 1.1/(3.73 + 6.08 * 10^{-7}(M_w)^{2.5} + 0.144/(\ln(\rho)))$$

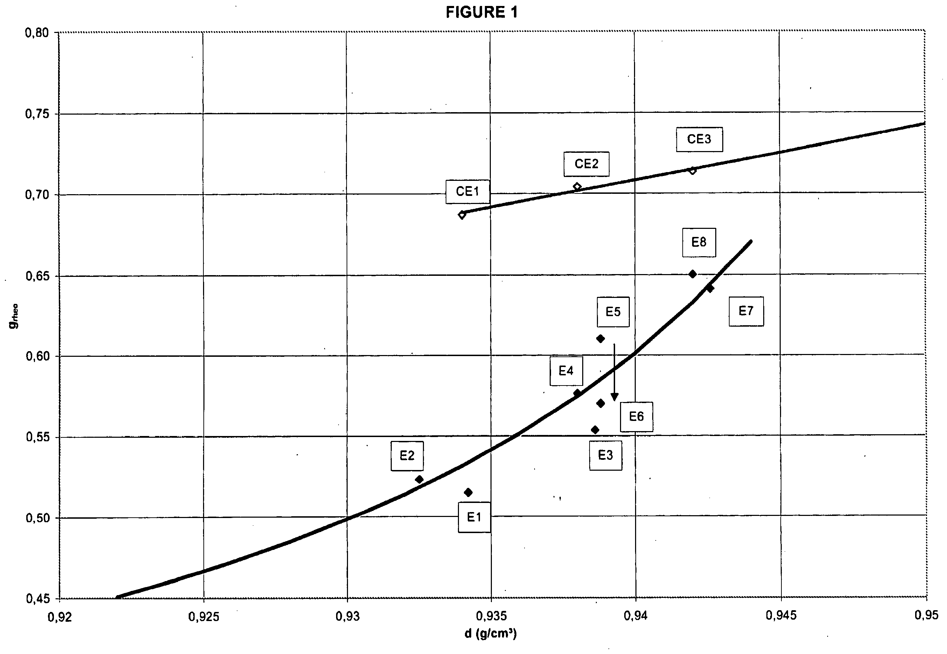

which takes into account the corrections of zero shear viscosity $\eta_0$, Mz, number average molecular weight Mn and density p of the polyethylene. Figure 1 shows that as the density of polyethylene descreases, $g_{rheo}$ decreases i.e. long chain branching increases. The $g_{rheo}$ is less than 0.65, preferably less than 0.60, more preferably less than 0.55. Standard deviation on the weight average molecular weight Mw for the 50 polyethylene samples determined from $\eta_0$ alone, as is the case in prior art methods such as LCBI, are a factor of over 2 greater than those derived by the present approach that includes corrections for SCB and polydispersity. In practice, $g_{rheo}$ of 0.95 and below can be associated with the presence of some long chain branching.

For the purposes of this invention, both LCBI or $g_{rheo}$ can be used to determine long chain branching. $g_{rheo}$ has been included herein, because of its higher sensitivity and greater accuracy.

The LCBI can be calculated from $g_{rheo}$ according to the following empirical equation:

$$LCBI = (2.06 - 2.02\ g_{rheo})^2$$

Hence the LCBI of the polyethylene is at least 0.56, preferably at least 0.72, more preferably at least 0.90.

*Processing properties*

As a result of the presence of long chain branching and hence of long relaxation times and of broad distribution of relaxation times, the effects on rheological properties of practical interest are maximised. By rheological properties of practical interest, one can cite a high zero-shear viscosity combined with high shear-thinning behaviour as translated by a high ratio of low to high shear viscosities that result in good sagging resistance and low extruder head pressure. Also melt strength is known to increase with increasing zero shear viscosity in polyethylene as discussed for example by Ghijsels et al. (A. Ghijsels, J.J. S. M. Ente, and J. Raadsen, in Intern. Polymer Processing V (4), 284, 1990) and a high melt strength is associated with good bubble stability in film blowing as explained in Ghijsels et al. (A. Ghijsels, ibid., M. Fleissner, in Intern. Polymer Processing, II (3/4), 229, 1988), or by Münsted et al. (H. Münsted, T. Steffl and A. Malmberg, in Rheol. Acta, 45, 14, 2005). Improved strain-hardening in transient elongational viscosity tests is also a direct result of the long chain branching in polyethylene.

It follows from these rheological criteria that the polyethylene of this invention has enhanced processability when compared to other polyethylenes of similar density and weight average molecular weight. Thus, the presence of LCB in the polyethylene according to the invention may result in one more additional properties which are described below.

The polyethylene according to the invention has a zero shear viscosity $\eta_0$, which increases with decreasing $g_{rheo}$ for a given molecular weight i.e. zero shear viscosity increases with increasing LCB. According to one embodiment of the invention the polyethylene has a higher zero shear viscosity than when compared to the zero shear viscosity of a polyethylene produced with other chromium-based catalysts having a similar weight average molecular weight Mw and density.

As is known to a person skilled in the art the shear response of polyethylene i.e. HLMI/MI2 increases with increasing weight average molecular weight Mw, molecular weight distribution Mw/Mn and long chain branching content. According to another embodiment the polyethylene has a better shear response i.e. a higher HLMI/MI2 than when compared to the HLMI/MI2 of a polyethylene produced with other chromium-based catalysts having a similar weight average molecular weight Mw and density. Preferably, the HLMI/MI2 is from 90, 95, 97 or 100 up to 120, 130, 150 or 200 for HLMI within the range of 10 to 20.

The melt strength of a polyethylene depends on the amount of weight average molecular weight Mw, molecular weight distribution Mw/Mn and long chain branching. The polyethylene according to the invention has increasing amounts of long chain branching as its density decreases and thereby increasing melt strength. According to one embodiment, the melt strength of the polyethylene is higher than when compared to the melt strength of a polyethylene produced with other chromium catalysts having a similar density and weight average molecular weight Mw.

According to a further embodiment of the current invention, the extruder head pressure required for processing the polyethylene of the current invention is less than that required for processing a polyethylene produced with other chromium catalysts having a similar weight average molecular weight Mw and density. Hence the processing gains are much higher for the polyethylene of the invention than for previously known polyethylenes produced with other chromium catalysts.

Elongational viscosity of a polyethylene generally increases with increasing molecular weight and/or with increasing long chain branching. According to another embodiment of the invention, the elongational viscosity of the polyethylene is higher than when compared to the elongational viscosity of a polyethylene produced with other chromium catalysts having a similar weight average molecular weight Mw and density. Polyethylenes with LCB and thereby high elongational viscosity as in the current invention are particularly suitable for foam extrusions.

Shear response, SR, (defined as the ratio of HLMI to MI2), extruder head pressure, zero shear viscosity (which is also related to sag resistance), melt strength and elongational viscosity can all be improved when compared to polyethylenes having similar density and weight average molecular weight Mw and produced with other chromium catalysts.

It should also be noted that according to another embodiment of the invention the polyethylene has lower gel levels than polyethylenes obtained using other chromium catalysts.

The invention also covers polyethylenes wherein any two or more embodiments regarding the processing properties mentioned above are combined.

## Mechanical properties

In general it is known that the mechanical properties related to fracture and crack propagation, e.g. ESCR, worsen with increasing amounts of long chain branching. However, in the case of the present invention, by decreasing the density of the polyethylene is it possible to obtain comparable mechanical properties to that of known polyethylene grades having similar densities and weight average molecular weights produced by other chromium catalysts and even better mechanical properties than LDPE obtained at high pressures. At the same, the good processability of the polyethylene according to the invention is retained.

According to an embodiment of the present, by decreasing the density of the polyethylene to below 0.930 g/cm3, preferably below 0.925 g/cm3, mechanical properties such as dart impact resistance and/or film tear resistance can be increased.

## The chromium-based catalyst

The polyethylene according to the invention can be obtained by polymerising ethylene in a gas phase polymerisation reactor in the presence of a comonomer comprising 3 to 10 carbon atoms and a chromium catalyst having specific amounts of titanium and chromium and which was titanated and activated under specific conditions. It has thus been found that the manufacturing process of the chromium catalyst used according to the invention, leads to low and medium density polyethylene having unexpectedly good properties, as mentioned above. A description of the manufacturing process of the catalyst follows below.

Indeed, the inventors have found that a particular chromium-based catalyst having a moderate specific surface area support, which has been dehydrated and the surface titanated prior to the activation of the catalyst at elevated temperatures, can unexpectedly yield polyethylene having high levels of long chain branching.

The activated catalyst is obtained by:

i) providing a silica-based support having a specific surface area of at least 250 $m^2/g$ and of less than 400 $m^2/g$ and comprising a chromium compound deposited thereon so that the chromium concentration is at least 0.1 wt-% and at most 1.0 wt-% based on the weight of the titanated chromium-based catalyst;

ii) dehydrating the product of step i);

iii) titanating the product of step ii) in an atmosphere of dry and inert gas containing at least one vaporised titanium compound of the general formula selected from $R_nTi(OR')_m$ and $(RO)_n Ti(OR')_m$, wherein R and R' are the same or different hydrocarbyl groups containing from 1 to 12 carbon atoms, and wherein n is 0 to 3, m is 1 to 4 and m+n equals 4, to form a titanated chromium-based catalyst having a titanium concentration of from 1 wt-% to 5 wt-% based on the weight of the titanated chromium-based catalyst;

iv) activating the titanated chromium-based catalyst of step iii) at a temperature of at least 500°C.

Suitable supports used in this invention are silica-based and comprise amorphous silica having a surface area of at least 250 m$^2$/g, preferably of at least 280 m$^2$/g, and less than 400 m$^2$/g, preferably less than 380 m$^2$/g and more preferably less than 350 m$^2$/g, including said values. The specific surface area is measured by N$_2$ adsorption using the well-known BET technique. In a previous application, EP 882 743, it had been assumed that a high surface area of at least 400 m$^2$/g was a prerequisite for obtaining polyethylene with good properties. In fact, here we show that the contrary is true.

Silica-based supports comprise at least 50% by weight of amorphous silica. Preferably the support is a silica support or a silica alumina support. In the case of silica alumina supports, the support comprises at most 15% by weight of alumina.

The support can have a pore volume of 1 cm$^3$/g to 3 cm$^3$/g. Supports with a pore volume of 1.3 - 2.0 cm$^3$/g are preferred. Pore volume is measured by N$_2$ desorption using the BJH method for pores with a diameter of less than 1000A. Supports with too small a porosity result in a loss of melt index potential and in lower activity. Supports with a pore volume of over 2.5 cm$^3$/g or even with a pore volume of over 2.0 cm$^3$/g are less desirable because they require special expensive preparation steps (e.g. azeotropic drying) during their synthesis or subsequent modification with chromium compounds. In addition, because they are usually more sensitive to attrition during catalyst handling, activation or use in polymerisation, these supports often lead to more polymer fines production, which is detrimental in an industrial process.

The silica-based support can be prepared by various known techniques such as but not limited to gelification, precipitation and/or spray-drying. Usually, particle size D50 is from 20 $\mu$m, preferably from 30 $\mu$m and more preferably from 35 $\mu$m, up to 150 $\mu$m, preferably up to 100 $\mu$m and most preferably up to 70 $\mu$m. D50 is defined as a particle diameter, with 50 wt-% of particles having a smaller diameter and 50 wt-% of particles having a larger diameter. Particle size D90 is up to 200 $\mu$m, preferably up to 150 $\mu$m, most preferably up to 110 $\mu$m. D90 is defined as a particle diameter, with 90 wt-% of particles having a smaller diameter and 10 wt-% of particles having a larger diameter. Particle size D10 is at least 5 $\mu$m, preferably at least 10 $\mu$m. D10 is defined as a particle diameter, with 10 wt-% of particles having a smaller diameter and 90 wt-% of particles having a larger diameter. Particle size distribution is determined using light diffraction granulometry, for example, using the Malvern Mastersizer 2000. The particle morphology is preferably microspheroidal to favour fluidisation and to reduce attrition.

Prior to use for catalyst synthesis, the support is dried by heating or pre-drying under an inert gas, in a manner known to those skilled in the art, e.g. at about 200°C for from 8 to 16 hours under nitrogen or other suitable gases.

Known chromium-containing compounds capable of reacting with the surface hydroxyl groups of the silica-based supports can be used for deposition of chromium on said support. Examples of such compounds include chromium nitrate, chromium(III)acetate, chromium(III)acetylacetonate, chromium trioxide, chromate esters such as t-butyl chromate, silyl chromate esters and phosphorous-containing esters, and mixtures thereof. Preferably, chromium acetate, chromium acetylacetonate or chromium trioxide is used.

The chromium content of the chromium-based catalyst can be of from 0.1 wt-%, preferably from 0.2 wt-%, up to 1.0 wt-%, preferably up to 0.6 wt-% of chromium, based on the weight of the titanated chromium-based catalyst.

The chromium content of the chromium-based catalyst can be chosen to get a ratio of the specific surface area of the support to chromium of at least 25000 m$^2$/g chromium, preferably from 25000, 50000 or 55000 m$^2$/g chromium, up to 75000, 100000 or 200000 m$^2$/g chromium. Thus, there is at most 1 g of chromium per 25000 m$^2$/g of specific surface area of the support.

The chromium-based catalyst can be prepared by dry mixing or non-aqueous impregnation but is preferably prepared by impregnation of silica with an aqueous solution of a soluble chromium compound such as chromium acetate, chromium acetylacetonate or chromium trioxide.

After the chromium compound is deposited on the support, the chromium-based catalyst can be stored under a dry and inert atmosphere, for example, nitrogen, at ambient temperature.

The supported chromium-based catalyst is subjected to a pre-treatment in order to dehydrate it and drive off physically adsorbed water from the silica or silica-based support. The removal of physically adsorbed water can help to avoid the formation of crystalline TiO$_2$ as a product from the reaction of water with the titanium compound subsequently introduced during the titanation procedure, as described below. The dehydration step is preferably carried out by heating the catalyst to a temperature of at least 220°C, more preferably of at least 250°C and most preferably of at least 270°C, in a fluidised bed and in a dry inert atmosphere of, for example, nitrogen. The dehydration step is usually carried out for 0.5 to 2 hours.

In a next step, the supported chromium-based catalyst is loaded with one or more titanium compounds. The titanium compounds may be of the formula $R_nTi(OR')_m$, $(RO)_nTi(OR')_m$ and mixtures thereof, wherein R and R' are the same or different hydrocarbyl groups containing 1 to 12 carbon atoms, and wherein m is 1, 2, 3 or 4 and m+n equals 4. Preferably, the titanium compounds are titanium tetraalkoxides $Ti(OR')_4$ wherein each R' is the same or different and can be an alkyl or cycloalkyl group each having from 3 to 5 carbon atoms. Mixtures of these compounds can also be used. The titanation is preferably performed by progressively introducing the titanium compound into a stream of a dry and inert non-oxidizing atmosphere, for example, nitrogen. The titanation step is carried out at a temperature so that titanium compound is present in its vaporised form. The temperature is maintained preferably at at least 220°C, more preferably at at least 250°C and most preferably at at least 270°C. The titanium compound can be pumped as a liquid into the reaction zone where it vaporizes.

This titanation step can be controlled so that the final concentration of deposited titanium on the treated catalyst is from 1.0 wt-%, preferably from 2.0 wt-%, up to 5.0 wt-%, preferably up to 4.0 wt-%, based on the weight of the titanated chromium-based catalyst.

This titanation step can also be controlled so that the ratio of the specific surface area of the support to titanium content of the resultant catalyst is from 5000 to 25000 $m^2$/g Ti, and preferably from 5000, 6500, 7500 or 9000 $m^2$/g Ti, up to 12000, 15000, 20000 or 25000 $m^2$/g Ti. Preferably, if the support has a specific surface area of from at least 250 $m^2$/g and of less than 380 $m^2$/g, the ratio of specific surface area of the support to titanium content of the titanated catalyst ranges from 5000 to 20000 $m^2$/g Ti, and if the support has specific surface area of from at least 380 and of less than 400 $m^2$/g, the ratio of specific surface area of the support to titanium content of the titanated catalyst ranges from 5000 to 8000 $m^2$/g Ti. The total amount of titanium compound introduced into the gas stream is calculated in order to obtain the required titanium content in the resultant catalyst and the progressive flow rate of the titanium compound is adjusted in order to provide a titanation reaction period of 0.5 to 2 hours.

After the introduction of the titanium compound, the catalyst can be flushed under a gas stream for a period of typically 0.75 to 2 hours. The dehydration and titanation steps are preferably performed in the vapour phase in a fluidised bed.

After titanation the catalyst can be stored under a dry and inert atmosphere, for example, nitrogen, at ambient temperature.

The titanated chromium-based catalyst is then activated. In order to activate the titanated catalyst, it must be subjected to dry air at an elevated activation temperature for at least 2 hours, preferably for at least 4 hours. The activation temperature is at least 500°C. The temperature can range from 500°C or 525 °C, up to 600°C, 650°C, 700°C, 750°C, 800°C or 850°C. Molecular weight of the resulting polyethylene decreases, i.e. HLMI and MI2 increase, with increasing activation temperature of the catalyst. The atmosphere is changed from the dry and inert atmosphere, such as nitrogen, to dry air, either progressively or instantly. If after the titanation step, the catalyst is not intended for storage, the temperature can be progressively increased from the titanation temperature to the activation temperature without intermediate cooling.

### *The polymerisation process*

The catalyst described above is used in a gas phase polymerisation process to obtain the polyethylene of the present invention.

Gas phase polymerisations can be performed in any kind of gas phase polymerisation reactor such as in one or more fluidised bed or agitated bed reactors. The gas phase comprises ethylene, an alpha-olefinic comonomer comprising 3 to 10 carbon atoms, for example propylene, butenes, pentenes, hexenes and the like, and an inert gas such as nitrogen. Preferred comonomers are 1-butene, 1-hexene, 4-methyl-1-pentene, 1-octene or mixtures thereof. Optionally a metal alkyl can also be injected in the polymerisation medium as well as one or more other reaction-controlling agents, for example, hydrogen. The density of the polyethylene obtained in this process is of from 0.910 to 0.945 g/cm3 and is regulated as is known by a person skilled in the art by the amount of comonomer added to the reactor. For medium and low density polyethylenes, the lower the temperature within the reactor and the higher the chromium content of the activated catalyst (or the lower the ratio of the specific surface area to chromium content), the better the processability of the resin will be due to the presence of increased long chain branching. Reactor temperature can be adjusted to a temperature of from 80, 85, 90 or 95°C up to 98, 100, 110, 112 or 115°C *(Report 1: Technology and Economic Evaluation, Chem Systems, January 1998)*. Optionally a hydrocarbon diluent such as pentane, isopentane, hexane, isohexane, cyclohexane or mixtures thereof can be used if the gas phase unit is run in the so-called condensing or super-condensing mode. A polyethylene according to the invention having a density of from 0.910 to 0.945 g/cm3 is retrieved from the gas phase polymerisation reactor after polymerisation.

It has also been found that the catalyst used in this invention also reduces the effect of statism in the gas phase polymerisation reactor. Indeed, the polymerisation of ethylene in a gas phase process often causes a generation of electrostatic charges that result in the accumulation of powder on the surface of the reactor, leading to sheeting or crust formation. However, with the present catalyst there is almost no variation of electrostatic potential in the reactor.

The chromium catalyst used in this invention imparts on the polyethylene obtained in the gas phase, properties neither obtainable from slurry or solution polymerisations, nor with any other known catalyst in the gas phase. It is thought that the low specific surface area and chromium content of the catalysts titanated and activated as described above, result in an activated catalyst particularly prone to creating long chain branching in the gas phase. Without wishing to be bound by theory, it is thought that the non-homogeneous distribution of titanium on the catalyst resulting in a higher titanium concentration on its surface results in a higher amount of macromonomer adsorption. It is thought that better incorporation of these macromonomers is achieved in the gas phase, since there is, contrary to the slurry or solution process, no diluent available for the macromonomers to diffuse to.

### *Extrusion*

Contrary to other previously known polyethylenes, no processing aids or other additives besides the standard antioxidant package are required for obtaining the polyethylene according to the invention.

Optionally even higher levels of long chain branching in the polyethylene according to the invention are obtainable by using well known methods in the art such as reactive extrusion in the presence of peroxides, controlled amounts of oxygen or by ionising prior to or after extrusion.

### *Applications*

The polyethylene according to the invention can be used in a variety of applications, for example in cable coating and in films. By decreasing the density of the polyethylene to below 0.930, preferably below 0.925 g/cm$^3$, it is possible to obtain a polyethylene with improved mechanical properties such as improved dart impact resistance and improved film tear resistance. Such polyethylenes are particularly good for being used alone in film applications.

It is also possible to blend the polyethylene of the invention with a second polyethylene selected from one or more of metallocene-based polyethylene, Ziegler-Natta - based polyethylene and other chromium-based polyethylenes. The blend has a higher processability than the second polyethylene alone. The resulting blends can be used in film applications and in shrink films in particular.

It is also possible to blend the polyethylene of the invention with a second polyethylene selected from high pressure radically polymerised LDPE. The resulting blend has improved mechanical properties when compared to the mechanical properties of the second polyethylene alone. The resulting blends can be used in film applications and in shrink films in particular.

Furthermore, the polyethylene according to the invention is also suitable for foam applications due to the improvement in elongational viscosity arising from the long chain branching.

### EXAMPLES

The examples E1 to E8 in Table 1 demonstrate the improved properties of the polyethylene according to the invention. CE1 is a comparative example of polyethylenes E1 and E2, CE2 of polyethylenes E3 to E6 and CE3 of polyethylenes E7 and E8.

Polyethylenes E1 to E8 are produced by polymerising ethylene in the presence of ethylene, 1-hexene and a chromium-based catalyst according to the invention. The chromium-based catalyst was obtained by deposition of about 0.5 wt-% chromium (Cr) on a microspheroidal silica support having a specific surface area of 300 m2/g. The chromium source was Cr(III)acetate. Impregnation with Cr-acetate was performed by incipient wetness impregnation, using an aqueous solution of the Cr-salt. The ratio surface area/Cr was about 60000 m$^2$/g Cr.

The starting catalyst was activated in an industrial fluidised bed activator according to the following procedure:

- about 200 kg of the starting solid was introduced in a fluidised bed activator;
- the starting solid was heated up to 120°C and then to 270°C in 3 hours under nitrogen and maintained at this temperature for about 2 hours;
- about 41 - 45 kg of titanium tetraisopropoxide (available under the trade name TYZOR® TPT) were progressively injected in the fluidised bed (over 2 hours whilst maintaining the temperature at 270°C so that titanium compound vaporised);
- the obtained titanated catalyst was further maintained at 270°C under nitrogen flow for 2 hours;
- nitrogen was replaced by air and the titanated catalyst was heated up to a temperature of at least 500°C depending on the desired molecular weight of the final polyethylene and maintained at this temperature for 6 hours;

- the activated catalyst was cooled down to 350°C under air and then to room temperature under nitrogen;
- the activated catalyst was unloaded under nitrogen and kept under inert atmosphere prior to further use in the gas phase polymerisation process.

Industrial polymerisation trials were performed in a fluidised bed reactor. 1-hexene to ethylene ratios varied from 30 to 60 kg/T; the higher the 1-hexene to ethylene ratio, the lower the density of the final polyethylene. Polymerisation temperatures used were from 95 to 105°C, depending on the desired density of the final polymer.

The polymers obtained in the Examples and Comparative examples were tested with different methods.

The polyethylenes of the comparative examples are commercialised resins whereby CE1 is sold as HF513, CE2 as HT514 and CE3 as HR515 all sold by TOTAL Petrochemicals. They are obtained using tergel chromium catalysts having a specific surface area of about 500 $m^2$/g, a chromium content of 1% and a titanium content of 2.5% in slurry phase. The tergel catalysts are prepared by cogel percipitation of chromium, silicon and titanium salts. The catalyst was activated at a temperature of at least 500°C depending on the desired molecular weight.

The melt indices of the polymers were measured according to the standard ASTM D 1238. MI2 corresponds to a measure at 190°C under a load of 2.16 kg. HLMI corresponds to a measure at 190°C under a load of 21.6 kg and the results are given in g/10 minutes. Shear ratio SR2 was calculated as HLMI/MI2.

The density was measured according to the standard ASTM D1505-85 and given in g/$cm^3$.

The number average molecular weight Mn, the weight average molecular weight Mw and the z-average molecular weight Mz were measured by gel permeation chromatography Waters S.A. GPC2000 gel permeation chromatograph. The chromatograph had been calibrated on a broad standard. Filtered samples are injected at a volume of 300µl. Three columns were used, two Shodex AT-806MS columns from Showa Denko and one Styrogel HT6E column from Waters with a flow rate of 1 ml/min. The injection temperature was 145 °C, the injection volume comprised about 1000 ppm of stabiliser butylhydroxytoluene (BHT). The sample was prepared by mixing 10-15 g of polyethylene with 10-15 ml of 1,2,4-trichlorobenzene (TCB) comprising 1g/l BHT during 1 hour at 160 °C. The mixture was filtered on a membrane of 0.50 µm and the concentration of the solution was 0.1 % in room temperature.

The calibration is based on narrow polystyrene standards. The calibration curve is fitted using a third order polynomial:

$$\log(Mp) = A\ t^3 + B\ t^2 + C\ t + D.$$

where :

log = logarithm to the base 10
Mp is the molecular weight at the distribution peak as announced in the certificate.
t is the time (expressed in seconds).

Using this calibration curve, the molecular weights obtained after integration would be based on polystyrene. To convert each measured data point from PS to PE, we use the following relationship:

$$\log(Mp[PE]) = A\ \log(MP[PS]) + B$$

where:

A = 0.965909
B = -0.282638

Data treatment is performed using the Empower software (Waters).

The detector used was refractory indexer and the results were treated with the program Empower of Waters S.A. The results are given in kDa. The molecular weight distribution MWD, or more simply defined by a parameter known as the dispersion index D, was calculated as the ratio of Mw and Mn. CY parameters were fitted from frequency sweep (0.05-0.1 to 250-500 rad/s) experiments performed at 190°C with 10 % strain on ARES (TA instruments).

Extruder head pressure was measured on a Kiefel blown polyethylene film line at 100 kg/h.

Melt strength (MS) is expressed in N and pressure p is expressed in MPa. For this purpose, on-line melt strength measurements are performed on a Brabender extruder single screw with a mixing pin (L:D ratio of 25, a diameter of 19 mm and a compression ratio of 4:1) equipped with a Göttfert Rheotens 71-97 take-off accessory when extruding through a die with a ratio L/D of 15 and a diameter D of 2 mm, at various shear rates and at temperature of 190 °C. Melt strength experiments are similar to those recommended by Wagner et al. (M. H. Wagner, V. Schulze, and A. Göttfert, 'Rheotens-mastercurves and drawability of polymer melts', Polym. Eng. Sci. 36, 925, 1996). They are carried out at extrusion temperature of 190°C, spinline length of 100 mm, acceleration of 30 mm/s$^2$, gear spacing of 0.4 mm, capillary die with length-to-diameter ratio of 30/2 mm with tapered entrance angle of 40°.

Elongational viscosity was measured at 140°C at a shear rate of 0.05 s$^{-1}$ using EVF (Extensional Viscosity Fixture) and ARES apparatus (both from TA instruments).

Mechanical properties were tested on 40$\mu$m films of the polyethylene blown on the Kiefel. Tear Resistance in machine direction (Tear M in N/mm) and tear resistance in transverse direction (Tear T in N/mm) were measured according to the Elmendorf Tear Strength method according to ASTM D 1938. Dart impact resistance (dart in g/$\mu$m) was measured according to ASTM D 1709.

Results of the analysis are shown below in Table 1 and in Figures 1 to 6. Figures 1 to 6 also show comparisons to the LDPE FB3010 obtained from high pressure radical polymerizations. It has the following characteristics: an MI2 of 0.26 dg/min, a density of 0.922 g/cm3, an Mn of 22.5 kDa, an Mw of 147 kDa, an Mz of 510 kDa, as measured by GPC, and an Mn of 25.5 kDa, an Mw of 348 kDa, an Mz of 2242 kDa as measured by SEC-VISCO providing a g' of 0.4. From Figure 1 it can be observed that as the density (in g/cm$^3$) of the polyethylene according to the invention decreases, g$_{rheo}$ decreases. It can be seen that g$_{rheo}$ decreases more than for the polyethylene of the comparative examples at the same density decrease. Furthermore, for a given density and molecular weight Mw, g$_{rheo}$ is smaller than a polyethylene of similar density and Mw made with the chromium tergel catalyst as in the comparative examples. For instance, E8 and CE3 have similar densities and HLMI and MI2, but the g$_{rheo}$ of E8 is much smaller, indicating more LCB in E8. The difference in g$_{rheo}$ is even more pronounced when comparing polyethylenes at much lower densities i.e. 0.934 g/cm$^3$. Furthermore, Figure 1 also shows that at a given density, as Mw increases, g$_{rheo}$ decreases. This can be observed for examples for the Mw increase from E5 and E6.

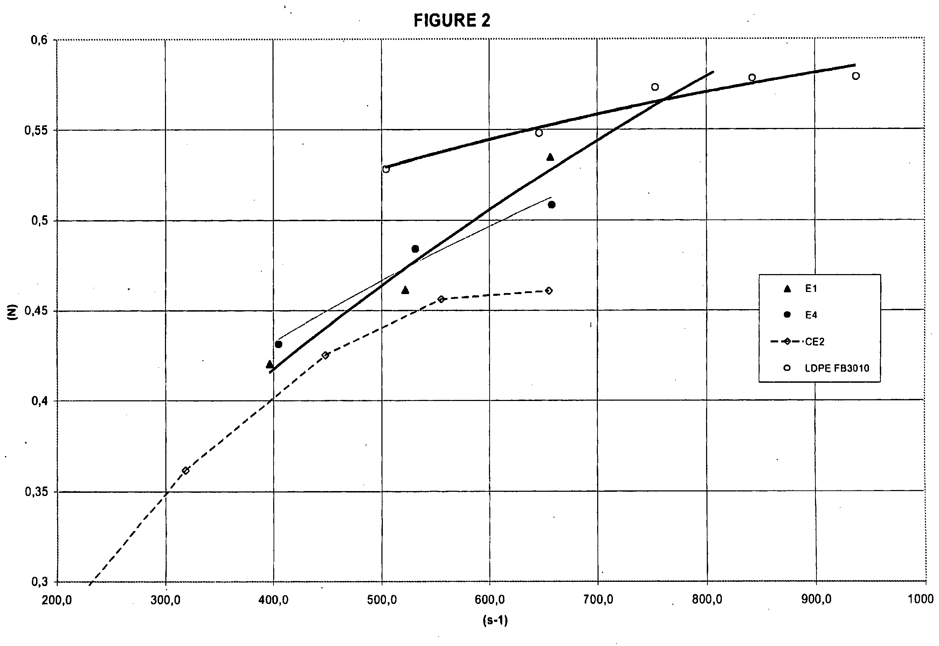

In Figure 2 the improved melt strengths (in Newtons N) at increasing shear rate (in s$^{-1}$) of the polyethylene are demonstrated. E4 has a higher melt strength than CE2 which has similar HLMI, MI2 and densities to E4. As the shear rate increases, the increase in melt strength becomes more pronounced. This is due to the rheological effects induced by the increased long chain branching in E4.

Figure 2 also shows that the melt strength of the polyethylene E1 according to the invention is the same as or approaches that of LDPE made by high pressure radical polymerisation, at high shear rates. LDPE FB3010 has a similar density and Mw to E1.

Table 1 also shows the improvement in the extruder head pressure of the branched low and medium density polyethylenes of the invention. The comparative examples of conventional chromium catalyst based polyethylenes all require higher extruder head pressures at the given shear rate.

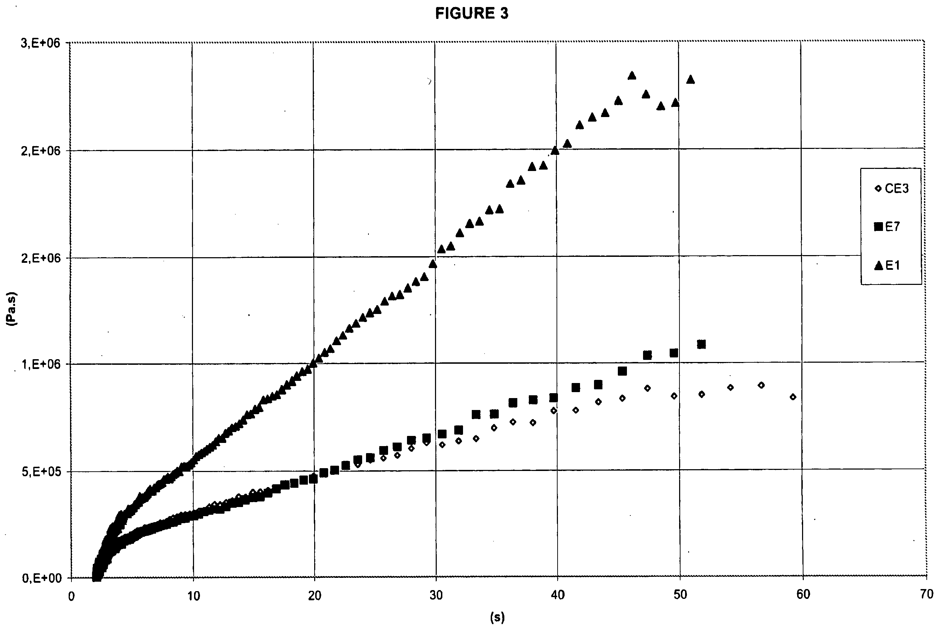

Figure 3 describes the elongational viscosity (in Pa.s) of the polyethylene according to the invention as a function of time (in s). Normally with increasing Mw, the elongational viscosity of a polyethylene should increase. However, in this case, the comparative example CE3 having a higher Mw than E7, actually shows lower elongational viscosity. This is due to the increased presence of long chain branching in E7 when compared to the polyethylene CE3 obtained in a slurry process with a conventional chromium catalyst. This improvement in elongational viscosity makes the long chain branched polyethylene particularly suitable for use in foam applications. Indeed, in a preliminary trial it was not possible to obtain acceptable foam for CE1, because cellular collapse and numerous open foam structures occurred, whereas with E1 acceptable foam with regular cell structures was obtained, E1 having a higher amount of LCB than E7 and therefore higher elongational viscosity.

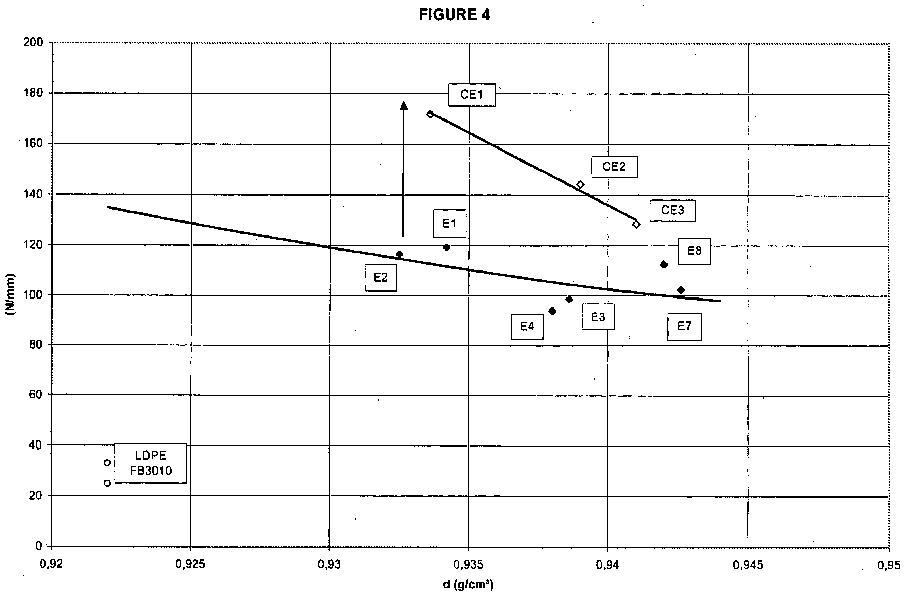

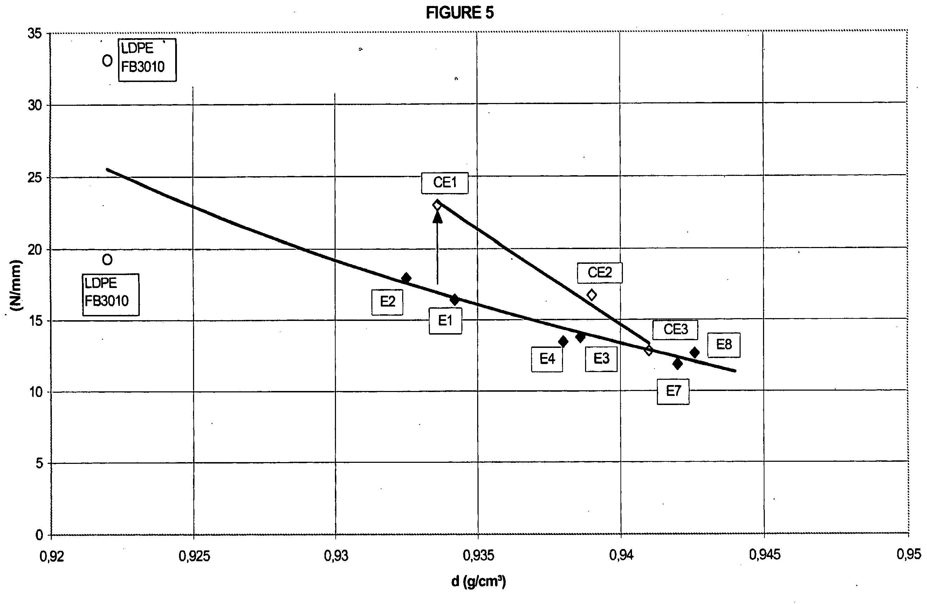

Figure 4 shows the improved mechanical properties of the polyethylene according to the invention with decreasing density. In particular Figure 4 shows the Elmendorf tear resistance (Tear T in N/mm) in the transverse direction of extrusion as a function of density (in g/cm$^3$). As density decreases, the good mechanical properties of the polyethylene obtained using catalysts in the slurry phase (CE1, CE2 and CE3) can be approached. As a result, the long chain branched polyethylene of the invention at even lower densities i.e. below 0.930 g/cm$^3$ have a good balance of processability and mechanical properties. At these lower densities, the branched low density polyethylene of the invention has a much better tear resistance in transverse direction than the LDPE obtained from high pressure radical polymerisations, as can be seen in the extrapolation in Figure 4. Similar trends in relation to density are observed in measurements of the Elmendorf tear resistance in the machine direction (Tear M in N/mm) of extrusion as shown in Figure 5. This is a direct result of increased LCB in the polyethylene of the invention.

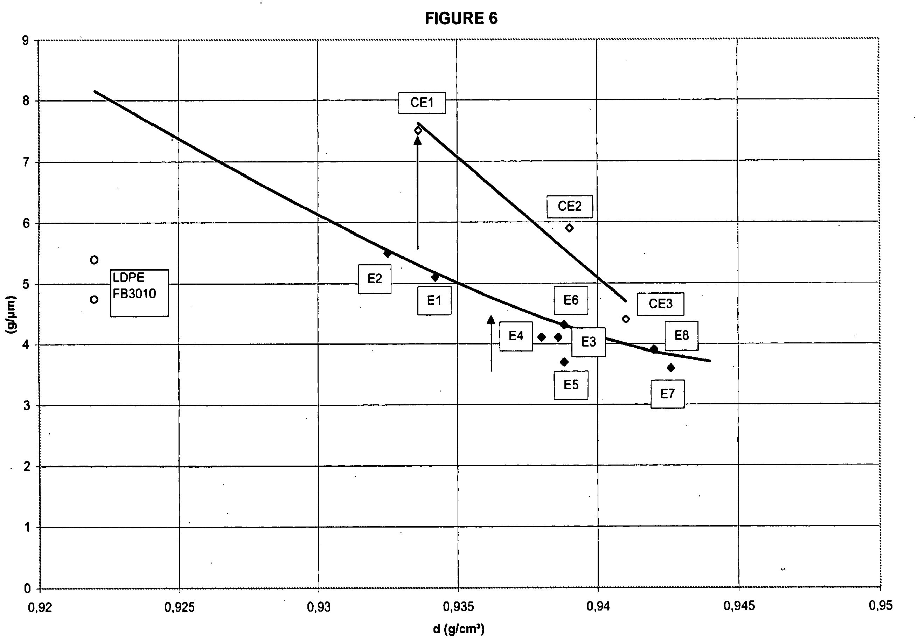

Figure 6 also shows a further improved mechanical property of the branched polyethylene according to the invention, namely the dart impact resistance (dart in g/$\mu$m). As density decreases, an improvement in the dart impact resistance is observed. By extrapolation it can be seen that at densities below 0.930 g/cm$^3$ the dart impact resistance approaches that of polyethylenes made in the slurry phase with conventional chromium catalysts. As for the tear resistance, the improvement in dart impact resistance is related to the increase of LCB with decreasing density of the polyethylene according to the invention.

**Table 1**

| PE | GPC-DRI Data | | | Carreau-Yasuda Parameters | | | | $\rho$ g/cm$^3$ | $g_{rheo}$ | LCBI | HLMI (dg/min) | MI2 (dg/min) | SR | dart g/ $\mu$m | Tear M N/mm | TearT N/mm | Extruder P (Mpa) |
|---|---|---|---|---|---|---|---|---|---|---|---|---|---|---|---|---|---|
| | Mn kDa | Mw kDa | Mz kDa | $\eta_0$ Pa.s | $\tau$ | B | n | | | | | | | | | | |
| CE1 | 16 | 204 | 2053 | 792832 | 0,2096 | 0,1577 | 0 | 0,934 | 0,69 | 0,47 | 13,2 | 0,13 | 102 | 7,5 | 23 | 171,7 | 33.3 |
| E1 | 14,3 | 178 | 2113 | 2397027 | 0,4339 | 0,1331 | 0 | 0,934 | 0,51 | 1,03 | 14,9 | 0,11 | 135 | 5,1 | 16,4 | 119,2 | 30.0 |
| E2 | 13,8 | 185 | 2368 | 2414087 | 0,4476 | 0,1336 | 0 | 0,934 | 0,52 | 0,97 | 14,4 | 0,11 | 131 | 5,5 | 17,9 | 116,3 | 30.0 |
| CE2 | 16,1 | 204 | 2028 | 664935 | 0,1895 | 0,1625 | 0 | 0,938 | 0,70 | 0,42 | 12,4 | 0,13 | 95 | 5,9 | 16,7 | 144,2 | 33.6 |
| E3 | 13,9 | 181 | 1895 | 2006795 | 0,4102 | 0,1372 | 0 | 0,938 | 0,55 | 0,93 | 14,1 | 0,11 | 128 | 4,1 | 13,8 | 98,5 | 30.5 |
| E4 | 13,9 | 189 | 2162 | 1646104 | 0,3351 | 0,1395 | 0 | 0,938 | 0,58 | 0,80 | 14,1 | 0,11 | 128 | 4,1 | 13,4 | 93,9 | 31.6 |
| E5 | 12,9 | 171 | 1974 | 793079 | 0,1815 | 0,1471 | 0 | 0,9388 | 0,60 | 0,68 | 19,7 | 0,19 | 104 | 3,7 | 17,2 | 135,3 | 27.0 |
| E6 | 14,5 | 203 | 2325 | 2477765 | 0,4887 | 0,1414 | 0 | 0,9388 | 0,57 | 0,85 | 11,3 | 0,09 | 126 | 4,3 | 14,2 | 66,5 | 34.0 |
| CE3 | 15,4 | 204 | 2540 | 422480 | 0,1147 | 0,1655 | 0 | 0,942 | 0,71 | 0,30 | 17 | 0,2 | 85 | 4,4 | 12,8 | 128,5 | 27.6 |
| E7 | 14 | 180 | 1976 | 660527 | 0,1565 | 0,1539 | 0 | 0,942 | 0,64 | 0,56 | 17,1 | 0,17 | 101 | 3,6 | 11,9 | 102,3 | 26.5 |
| E8 | 14 | 177 | 1884 | 629799 | 0,1529 | 0,1540 | 0 | 0,942 | 0,64 | 0,56 | 17,4 | 0,18 | 97 | 3,9 | 12,6 | 112,3 | 26.2 |

EP 2 004 706 B2

**Claims**

1. A polyethylene **characterised in that** it has a combination of the following properties:

   a) a density of from 0.910 to 0.935 $g/cm^3$, preferably of from 0.915 to 0.935 $g/cm^3$;
   b) an HLMI of from 2 to 150 dg/min and an $MI_2$ of from 0.01 to 2 dg/min;
   c) a polydispersity index (PDI) Mw/Mn of at least 10, wherein Mw is the weight average molecular weight and Mn is the number average molecular weight of the polyethylene; and
   d) a long chain branching value selected from one of

   - a $g_{rheo}$ less than 0.65
   - an LCBI greater than 0.56.

2. A polyethylene according to claim 1 wherein the polyethylene has a long chain branching value selected from one of:

   - a $g_{rheo}$ less than 0.60
   - an LCBI greater than 0.72.

3. A polyethylene according to claim 1 or claim 2 wherein the HLMI is from 2 to 100 dg/min and the MI2 is from 0.01 to 1 dg/min.

4. A polymerisation process comprising the following steps:

   a) injecting ethylene, one or more alpha-olefinic comonomers comprising 3 to 10 carbon atoms and an activated chromium-based catalyst into a gas phase polymerisation reactor;
   b) copolymerising said ethylene and comonomer in said reactor in the gas phase; and
   c) retrieving an ethylene copolymer having a density of from 0.910 to 0.945 $g/cm^3$ from said reactor;

   said activated catalyst being previously obtained by:

   i) providing a silica-based support having a specific surface area of at least 250 $m^2/g$ and of less than 400 $m^2/g$ and comprising a chromium compound deposited thereon so that the chromium concentration is at least 0.1 wt-% and at most 1.0 wt-% based on the weight of the titanated chromium-based catalyst;
   i) dehydrating the product of step i);
   ii) titanating the product of step ii) in an atmosphere of dry and inert gas containing at least one vaporised titanium compound of the general formula selected from $R_nTi(OR')_m$ and $(RO)_nTi(OR')_m$, wherein R and R' are the same or different hydrocarbyl groups containing from 1 to 12 carbon atoms, and wherein n is 0 to 3, m is 1 to 4 and m+n equals 4, to form a titanated chromium-based catalyst having a titanium concentration of from 1 wt-% to 5 wt-% based on the weight of the titanated chromium-based catalyst; and
   iii) activating the titanated chromium-based catalyst of step iii) at a temperature of at least 500°C.

5. A process according to claim 4 wherein the activated catalyst has a support with a specific surface area of from 250 to 380 $m^2/g$.

6. A process according to claim 4 or 5 wherein the activated catalyst has a ratio of specific surface area of the support to chromium content of at least 25000 $m^2/g$ Cr, preferably of at least 50000 $m^2/g$ Cr.

7. A process according to any one claims 4 to 6 wherein the activated catalyst has a ratio of specific surface area of the support to titanium content of from 5000 to 25000 $m^2/g$ Ti, preferably of from 5000 to 20000 $m^2/g$ Ti.

8. A process according to any one of claims 4 to 7 wherein the activated titanated chromium-based catalyst is activated at a temperature of from 500 to 850°C, preferably of from 500 to 750°C.

9. A process according to any one claims 4 to 8 wherein the polymerisation process is carried out in a fluidised bed gas phase polymerisation reactor.

10. Use of the polyethylene according to any one of claims 1 to 3 in films wherein the density of the polyethylene is below 0.930 $g/cm^3$.

11. Use of the polyethylene according to any one of claims 1 to 3 for foam extrusion or for cable coatings.

12. Use of the polyethylene according to any one of claims 1 to 3 by blending with a second polyethylene, selected from one or more of the following:

- a metallocene-based polyethylene
- a Ziegler-Natta-based polyethylene
- a chromium-based polyethylene using a chromium-based catalyst different from the catalyst used for the first polyethylene

wherein the resulting blend has improved processability when compared to the processability of the second polyethylene alone.

13. Use of the polyethylene according to any one of claims 1 to 3 by blending with a second polyethylene selected from high pressure radically polymerised LDPE, wherein the resulting blend has improved mechanical properties when compared to the mechanical properties of the second polyethylene alone.

**Patentansprüche**

1. Polyethylen, **dadurch gekennzeichnet, dass** es eine Kombination aus den nachfolgenden Eigenschaften aufweist:

a) eine Dichte von 0,910 bis 0,935 $g/cm^3$, vorzugsweise von 0,915 bis 0,935 $g/cm^3$;
b) einen HLMI von 2 bis 150 dg/min und einen $MI_2$ von 0,01 bis 2 dg/min;
c) einen Polydispersitätsindex (PDI) Mw/Mn von mindestens 10, wobei Mw das gewichtsgemittelte Molekulargewicht und Mn das zahlengemittelte Molekulargewicht des Polyethylens ist; und
d) einen aus der nachfolgenden Gruppe gewählten Langketten-Verzweigungswert:

- ein $g_{rheo}$ von weniger als 0,65
- einen LCBI von mehr als 0,56.

2. Polyethylen nach Anspruch 1, wobei das Polyethylen einen aus der nachfolgenden Gruppe gewählten Langketten-Verzweigungswert aufweist:

- ein $g_{rheo}$ von weniger als 0,60
- einen LCBI von mindestens 0,72.

3. Polyethylen nach Anspruch 1 oder 2, wobei der HMLI von 2 bis 100 dg/min und der MI2 von 0,01 bis 1 dg/min ist.

4. Polymerisationsverfahren, umfassend die nachfolgenden Schritte:

a) Injizieren von Ethylen, einem oder mehreren alfa-olefinischen Comonomeren, die 3 bis 10 Kohlenstoffatome umfassen und einem aktivierten Katalysator auf Chrombasis, in einen Gasphasenpolymerisationsreaktor;
b) Copolymerisieren des Ethylens und des Comonomers im Reaktor in der Gasphase; und
c) Entnehmen eines Ethylencopolymers aus dem Reaktor, das eine Dichte von 0,910 bis 0,945 $g/cm^3$ aufweist; wobei der aktivierte Katalysator vorher wie folgt gewonnen wurde:

i) Bereitstellen eines Trägers auf Siliciumdioxidbasis, der eine spezifische Oberfläche von mindestens 250 $m^2/g$ und weniger als 400 $m^2/g$ aufweist und eine darauf abgelagerte Chromverbindung umfasst, so dass die Chromkonzentration mindestens 0,1 Gew. % und höchstens 1,0 Gew. % bezogen auf das Gewicht des titanierten Katalysators auf Chrombasis beträgt;
i) Dehydrieren des Produktes des Schritts i);
ii) Titanieren des Produktes des Schritts ii) in einer mindestens eine verdampfte Titanverbindung ausgewählt aus $R_nTi(OR')_m$ und $(RO)_nTi(OR')_m$, wobei R und R' gleiche oder unterschiedliche Hydrocarbylgruppen sind, die 1 bis 12 Kohlenstoffatome enthalten, und wobei n 0 bis 3, m 1 bis 4 und m+n gleich 4 ist, enthaltenden Atmosphäre aus trockenem und inertem Gas, um einen titanierten Katalysator auf Chrombasis zu bilden, der eine Titankonzentration von 1 Gew. % bis 5 Gew. % bezogen auf das Gewicht des titanierten Katalysators auf Chrombasis aufweist; und

iii) Aktivieren des titanierten Katalysators auf Chrombasis des Schritts iii) bei einer Temperatur von mindestens 500 °C.

5. Verfahren nach Anspruch 4, wobei der aktivierte Katalysator einen Träger mit einer spezifischen Oberfläche von 250 bis 380 m2/g aufweist.

6. Verfahren nach Anspruch 4 oder 5, wobei der aktivierte Katalysator ein Verhältnis der spezifischen Oberfläche des Trägers zum Chromgehalt von mindestens 25000 $m^2$/g Cr, vorzugsweise mindestens 50000 $m^2$/g Cr aufweist.

7. Verfahren nach einem der Ansprüche 4 bis 6, wobei der aktivierte Katalysator ein Verhältnis der spezifischen Oberfläche des Trägers zum Chromgehalt von 5000 bis 25000 $m^2$/g Ti, vorzugsweise von 5000 bis 20000 $m^2$/g Ti aufweist.

8. Verfahren nach einem der Ansprüche 4 bis 7, wobei der aktivierte titanierte Katalysator auf Chrombasis bei einer Temperatur von 500 bis 850 °C, vorzugsweise von 500 bis 750 °C, aktiviert wird.

9. Verfahren nach einem der Ansprüche 4 bis 8, wobei das Polymerisationsverfahren in einem Wirbelschicht-Gasphasenpolymerisationsreaktor ausgeführt wird.

10. Verwendung des Polyethylens nach einem der Ansprüche 1 bis 3 in Folien, wobei die Dichte des Polyethylens unter 0,930 g/cm3 liegt.

11. Verwendung des Polyethylens nach einem der Ansprüche 1 bis 3 zur Schaumextrusion oder für Kabelbeschichtungen.

12. Verwendung des Polyethylens nach einem der Ansprüche 1 bis 3 durch Vermischen mit einem zweiten Polyethylen, das eines oder mehrere der nachfolgenden ist:

- ein Polyethylen auf Metallocenbasis
- ein Polyethylen vom Ziegler-Natta-Typ
- ein Polyethylen auf Chrombasis, wobei ein anderer Katalysator auf Chrombasis eingesetzt wird als der für das erste Polyethylen eingesetzte Katalysator,

wobei die resultierende Mischung im Vergleich zur Verarbeitbarkeit nur des zweiten Polyethylens eine verbesserte Verarbeitbarkeit aufweist.

13. Verwendung des Polyethylens nach einem der Ansprüche 1 bis 3 durch Vermischen mit einem aus radikalisch hochdruckpolymerisiertem LDPE gewählten zweiten Polyethylen, wobei die resultierende Mischung im Vergleich zu den mechanischen Eigenschaften nur des zweiten Polyethylens verbesserte mechanische Eigenschaften aufweist.

**Revendications**

1. Polyéthylène **caractérisé en ce qu'**il a une combinaison des propriétés suivantes :

a) une densité de 0,910 à 0,935 g/cm$^3$, de préférence de 0,915 à 0,935 g/cm$^3$ ;
b) un indice de fluage sous forte charge (IFFC) de 2 à 150 dg/min et un indice $MI_2$ de 0,01 à 2 dg/min ;
c) un indice de polydispersité (IPD) Mw/Mn d'au moins 10, Mw représentant le poids moléculaire moyen en poids et Mn représentant le poids moléculaire moyen en nombre du polyéthylène ; et
d) une valeur des ramifications à chaînes longues choisie parmi l'une de

- une valeur $g_{rhéo}$ inférieure à 0,65
- un indice de ramifications à chaînes longues IRCL supérieur à 0,56.

2. Polyéthylène selon la revendication 1 dans lequel le polyéthylène a une valeur des ramifications à chaînes longues choisie parmi l'une de :

- une valeur $g_{rhéo}$ inférieure à 0,60
- un indice de ramifications à chaînes longues IRCL d'au moins 0,72.

3. Polyéthylène selon la revendication 1 ou la revendication 2 dans lequel l'IFFC vaut de 2 à 100 dg/min et l'indice MI2 vaut de 0,01 à 1 dg/min.

4. Procédé de polymérisation comprenant les étapes suivantes :

a) injection d'éthylène, d'un ou plusieurs comonomères alpha-oléfiniques comprenant de 3 à 10 atomes de carbone et d'un catalyseur à base de chrome activé dans un réacteur de polymérisation en phase gazeuse ;
b) copolymérisation dudit éthylène et dudit comonomère dans ledit réacteur dans la phase gazeuse ; et
c) récupération d'un copolymère d'éthylène ayant une densité de 0,910 à 0,945 $g/cm^3$ à partir dudit réacteur ;

ledit catalyseur activé étant préalablement obtenu en :

i) prévoyant un support à base de silice ayant une surface spécifique d'au moins 250 $m^2/g$ et inférieure à 400 $m^2/g$ et comprenant un composé à base de chrome déposé au-dessus de manière à ce que la concentration du chrome soit d'au moins 0,1 % en poids et d'au plus 1,0 % en poids par rapport au poids du catalyseur à base de chrome traité avec un titanate ;
i) déshydratant le produit de l'étape i) ;
ii) réalisant une titanation du produit de l'étape ii) dans une atmosphère de gaz sec et inerte contenant au moins un composé à base de titane vaporisé de formule générale choisie parmi $R_nTi(OR')_m$ et $(RO)_nTi(OR')_m$, formules dans lesquelles R et R' sont des groupes hydrocarbyles identiques ou différents contenant de 1 à 12 atomes de carbone, et dans lesquelles n vaut 0 à 3, m vaut 1 à 4 et m + n est égal à 4, pour former un catalyseur à base de chrome traité avec un titanate ayant une concentration en titane de 1 % en poids à 5 % en poids par rapport au poids du catalyseur à base de chrome traité avec un titanate ; et
iii) activant le catalyseur à base de chrome traité avec un titanate de l'étape iii) à une température d'au moins 500 °C.

5. Procédé selon la revendication 4 dans lequel le catalyseur activé a un support ayant une surface spécifique de 250 à 380 m2/g.

6. Procédé selon la revendication 4 ou 5 dans lequel le catalyseur activé a un rapport de la surface spécifique du support à la teneur en chrome d'au moins 25 000 $m^2/g$ de Cr, de préférence d'au moins 50 000 $m^2/g$ de Cr.

7. Procédé selon l'une quelconque des revendications 4 à 6 dans lequel le catalyseur activé a un rapport de la surface spécifique du support à la teneur en titane de 5 000 à 25 000 $m^2/g$ de Ti, de préférence de 5 000 à 20 000 $m^2/g$ de Ti.

8. Procédé selon l'une quelconque des revendications 4 à 7 dans lequel le catalyseur à base de chrome traité avec un titanate activé est activé à une température de 500 à 850 °C, de préférence de 500 à 750 °C.

9. Procédé selon l'une quelconque des revendications 4 à 8 dans lequel le procédé de polymérisation est réalisé dans un réacteur de polymérisation en phase gazeuse à lit fluidisé.

10. Utilisation du polyéthylène selon l'une quelconque des revendications 1 à 3 dans des films dans lesquels la densité du polyéthylène est inférieure à 0,930 g/cm3.

11. Utilisation du polyéthylène selon l'une quelconque des revendications 1 à 3 pour l'extrusion de mousse ou pour le revêtement de câbles.

12. Utilisation du polyéthylène selon l'une quelconque des revendications 1 à 3 par mélange avec un deuxième polyéthylène, choisi parmi un ou plusieurs des suivants :

- un polyéthylène à base de métallocène
- un polyéthylène à base de Ziegler-Natta
- un polyéthylène à base de chrome utilisant un catalyseur à base de chrome différent du catalyseur utilisé pour le premier polyéthylène

dans laquelle le mélange résultant présente une transformabilité améliorée en comparaison avec la transformabilité du deuxième polyéthylène seul.

13. Utilisation du polyéthylène selon l'une quelconque des revendications 1 à 3 par mélange avec un deuxième polyéthylène choisi parmi le LDPE obtenu par polymérisation radicalaire à haute pression, dans laquelle le mélange résultant présente des propriétés mécaniques améliorées en comparaison avec les propriétés mécaniques du deuxième polyéthylène seul.

FIGURE 1

EP 2 004 706 B2

FIGURE 2

FIGURE 3

EP 2 004 706 B2

FIGURE 4

FIGURE 5

EP 2 004 706 B2

FIGURE 6

EP 2 004 706 B2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 07104426 A
- EP 0608369 A
- US 5665800 A
- EP 882743 A

### Non-patent literature cited in the description

- **FETTER et al.** Physical Properties of Polymers Handbook. 1996
- **JANZEN ; COLBY.** *J. Mol. Struct.,* 1999
- **F. M. MIRABELLA ; L. WILD.** Determination of Long-Chain Branching Distributions of Polyethylenes', in 'Polymer Characterization. *Amer. Chem. Soc. Symp. Series,* 1990, vol. 227, 23
- **S. LAI ; G.W. KNIGHT.** ANTEC '93 Proceedings, Insite™ Technology Polyolefins (ITP)-New Rules in the Structure/Rheology Relationship of Ethylene &-Olefin Copolymers. *Antec'94, Dow Rheology Index (DRI) for Insite™ Technology Polyolefins (ITP): Unique structure-Processing Relationships,* May 1993, 1814-1815
- **R. N. SHROFF ; H. MAVRIDIS.** *Macromolecules,* 1999, vol. 32, 8454
- **J. JANZEN ; R. H. COLBY.** *J. Mol. Struct.,* 1999, vol. 485-486, 569
- **A. GHIJSELS ; J.J. S. M. ENTE ; J. RAADSEN.** *Intern. Polymer Processing,* 1990, vol. 4, 284
- **M. FLEISSNER.** *Intern. Polymer Processing,* 1988, vol. II (3/4), 229
- **H. MÜNSTED ; T. STEFFL ; A. MALMBERG.** *Rheol. Acta,* 2005, vol. 45, 14
- **M. H. WAGNER ; V. SCHULZE ; A. GÖTTFERT.** Rheotens-mastercurves and drawability of polymer melts. *Polym. Eng. Sci.,* 1996, vol. 36, 925